# EUROPÄISCHE PATENTSCHRIFT

(11) **EP 1 359 796 B1**
(45) Veröffentlichungstag und Bekanntmachung des Hinweises auf die Patenterteilung: **13.04.2005**
(21) Anmeldenummer: 01943027.1
(22) Anmeldetag: 08.05.2001
(51) Int. Cl.: A01K 27/00

(54) **DRESSURHALSKETTE FÜR TIERE**
TRAINING COLLAR FOR ANIMALS
COLLIER DE DRESSAGE POUR ANIMAUX

(30) Priorität: 08.09.2000 DE 10044651
(43) Veröffentlichungstag der Anmeldung: 12.11.2003
(73) Patentinhaber: HERM. SPRENGER GmbH & Co. KG, D-58644 Iserlohn (DE)
(72) Erfinder: HERBST, Hans, Joachim, 58119 Hagen (DE)
(74) Vertreter: Bauer, Wulf, Dr.
(86) Internationale Anmeldenummer: PCT/DE2001/001726
(87) Internationale Veröffentlichungsnummer: WO 2002/019808

(56) Entgegenhaltungen:
- DE-C- 19 623 010
- US-A- 3 872 833
- US-A- 5 647 303

## Beschreibung

Die Erfindung bezieht sich auf eine Dressurhalskette für Tiere, z. B. Hunde, mit einem strangförmigen Halsteil und einer Durchzugskette, bei der das Halsteil aus einer Vielzahl von Kettengliedern zusammengesetzt ist, zu denen Zwischenglieder und zwei Endglieder gehören und diese Endglieder jeweils zwei Eingreifaugen, in die den zwei Endgliedern benachbarte Endzwischenglieder eingreifen, und eine Öse aufweisen, und die Durchzugskette eine geschlossene Schlaufe bildet, die durch die Ösen der beiden Endglieder hindurchgreift.

Bei dieser aus dem Stand der Technik vorbekannten Dressurhalskette sind sowohl die Endglieder als auch alle Zwischenglieder als Drahtbiegeteile ausgeführt. Die Ösen sind dabei durch im wesentlichen zwei Windungen des verwendeten Drahtmaterials erstellt. Die Eingreifaugen sind durch Endbereiche des Drahtzuschnittes gebildet, aus denen das Endglied hergestellt ist, Diese Endbereiche sind in sich zurückgebogen unter Ausbildung der Eingreifaugen, die dadurch etwa eine Tropfenform haben. Die beiden Endglieder sind baugleich. Mit jedem Endglied ist ein Endzwischenglied im Eingriff. Dabei unterscheiden sich die beiden Endzwischenglieder voneinander. Das Endzwischenglied eines Endbereichs, das also dem einen Endglied zugeordnet ist, ist mit den sonstigen Zwischengliedern baugleich. Dies liegt daran, dass die Kette eine Vorzugsrichtung hat, in der die Kettenglieder ineinandergreifen und miteinander zusammenhängen. Wie die baugleichen sonstigen Zwischenglieder, im folgenden Mittelglieder genannt, hat dieses erste Endzwischenglied nach innen, zum Hals des Tieres hin vorspringende Arme, die freie Enden haben. Diese Arme gehen von einem Grundkörper dieses ersten Endzwischengliedes aus, der eben ist. Dies gilt auch für alle anderen Mittelglieder. Die Arme springen gegenüber dieser Ebene des Grundkörpers vor unter Ausbildung jeweils einer U-förmigen Einhakzone. Diese Einhakzonen sind im Eingriff mit den Eingreifaugen.

Das andere, zweite Endzwischenglied hat einen unterschiedlichen Grundkörper. Bezüglich der Arme besteht kein Unterschied zum ersten Endzwischenglied.

Um die Dressurhalskette an ein Tier anzulegen, muss der Halsteil geöffnet werden. Dies geschieht dadurch, dass die Arme des ersten Endzwischengliedes aus ihrer Ruhestellung, in der sie leicht zu ihren freien Enden hin auseinanderlaufen, zusammengedrückt werden und durch die Eingreifösen hindurch gedrückt werden, sodass sie von den Eingreifösen freikommen.

Das hat nun aber folgenden Nachteil: Da sowohl das zugehörige Endglied als auch das erste Endzwischenglied Drahtbiegeteile sind, bewirkt eine dauerhafte Verformung des Abstandes zwischen den beiden Eingreifösen und/oder eine ähnliche dauerhafte Verformung des Hauptstücks, die zu einer Veränderung des Relativabstandes zwischen den beiden Einhakbereichen führt, eine spürbare Veränderung der Qualität der Verbindung zwischen dem Endglied und dem ersten Endzwischenglied. Dies kann soweit gehen, dass das erste Endzwischenglied relativ einfach aus dem Endglied auszuhaken ist, jedenfalls die gewünschte Federkraft der Arme, die diesem Aushaken entgegenwirken soll, nicht mehr in ausreichender Form vorliegt.

Während bei einer fabrikneuen, ungebrauchten Dressurhalskette die U-förmigen Einhakbereiche sich jeweils etwa in der Mitte der Eingreifaugen befinden, gibt es bei benutzten Dressurhalsketten immer mehr die Tendenz, dass sich entweder der Relativabstand zwischen den beiden Armen vergrössert oder verringert oder aber der Relativabstand zwischen den beiden Eingreifaugen kleiner oder grösser wird, was stets zur Folge hat, dass die mittige Position nun nicht mehr vorliegt und ein Herausdrücken der Arme aus den Eingreifaugen deutlich vereinfacht ist. Dies kann, wie schon angedeutet, zu einem ungewollten Lösen führen, also einer Trennung zwischen dem Endglied und dem ersten Endzwischenglied. Dies ist aber nachteilig und darf in der Praxis nicht auftreten.

Das zweite Endzwischenglied am anderen Ende des Halsteils ist beim Stand der Technik so mit dem zugehörigen Endglied verbunden, dass ein Lösen an dieser Stelle nicht möglich ist. Auch hierin liegt ein Nachteil, weil ein Benutzer nicht immer genau weiss, an welchem Endglied er das Halsteil auftrennen kann.

Hiervon ausgehend hat sich die Erfindung die Aufgabe gestellt, die Dressurhalskette der eingangs genannten Art weiterzubilden, insbesondere einem ungewollten Lösen zwischen einem Endglied und den zugehörigen Endzwischenglied entgegenzuwirken und aber auch eine einfachere Bedienbarkeit der Dressurhalskette zu ermöglichen.

Ausgehend von der Dressurhalskette der eingangs genannten Art wird diese Aufgabe dadurch gelöst, dass mindestens eines der beiden Endglieder als Platte ausgebildet ist, die an einem ersten Endbereich die Öse und an einem zweiten Endbereich, der dem ersten Endbereich gegenüberliegt, die beiden Eingreifaugen aufweist.

Bei dieser Dressurhalskette ist mindestens eines der beiden Endglieder nun nicht mehr ein Drahtbiegeteil, sondern eine Platte, die im wesentlichen die Form eines an seiner Spitze sehr stark abgerundeten Dreiecks hat, die Form ist sehr nahe derjenigen eines Rechtecks. Die Platte hat an einem ersten Endbereich die Öse und an einem zweiten, diesem ersten Endbereich gegenüberliegenden Endbereich die beiden Eingreifaugen. Dadurch ist der Relativabstand zwischen den beiden Eingreifaugen fixiert. Dieser Abstand kann also durch irgendwelche Manipulationen nicht geändert werden. Dadurch aber bleibt der Relativabstand zwischen den beiden Armen des ersten Endzwischengliedes stets innerhalb eines vorgegebenen Bereichs. Es kann nicht der Fall eintreten, dass ein Benutzer eine Vergrösserung des Abstandes der beiden Eingreifaugen dadurch ausgleicht, dass er den Abstand der beiden Arme entsprechend anpasst und vergrössert, wie dies im Fall der Dressurhalskette nach dem Stand der Technik gegeben ist. Es kann also nicht mehr der Fall auftreten, dass eine Abweichung eines der beiden zusammenwirkenden Teile durch eine in die gleiche Richtung gehende plastische Verformung des anderen Teils ausgeglichen wird, was dazu führt, dass auf Dauer der Abstand immer grösser oder immer kleiner wird und die Funktionalität stark beeinträchtigt wird. Gerade wegen des festen Abstandes der beiden Eingreifaugen ist es immer nur der Abstand zwischen den beiden Armen des ersten Endzwischengliedes, der angepasst werden kann und angepasst werden muss. Dieser Abstand kann niemals aus dem Normalbereich herauslaufen.

Darüberhinaus ist der Abstand zwischen den beiden Eingreifaugen auch mit hoher Festigkeit aufrechterhalten, unabhängig von irgendwelchen Biegeversuchen eines Benutzers wird der Abstand zwischen den Armen des ersten Endzwischengliedes immer wieder so eingeregelt, dass er im Normbereich bleibt. Weil nun der Abstand zwischen den beiden Eingreifaugen mit deutlich höherer Steifigkeit vorgegeben ist als der Abstand zwischen den beiden Armen des ersten Endzwischengliedes, muss sich letzteres immer wieder anpassen und erfolgt diese Anpassung auch bei jedem Ein- und Aushaken selbsttätig, unabhängig von einem Biegeversuch eines Benutzers.

Die Platte hat zudem deutliche ästhetische Vorteile. Sie ermöglicht schliesslich das Aufbringen von Hinweisen, beispielsweise über den Hersteller oder zur Bedienung. Die Platte vereinfacht für den Benutzer das Öffnen und Schliessen des Halsteiles, weil nunmehr für den Benutzer sofort erkennbar ist, wo er das Halsteil auftrennen muss, wenn er die Dressurhalskette anlegen bzw. von einem Tier abnehmen will. Waren bei der Dressurhalskette nach dem Stand der Technik die einzelnen Glieder des Halsteiles nicht so deutlich voneinander unterscheidbar, ist dies nun wesentlich vereinfacht. Der Benutzer hat dadurch erheblich Vorteile.

In einer bevorzugten Ausführung der Erfindung sind beide Endglieder als Platten ausgeführt, vorzugsweise sind diese beiden Endglieder baugleich. Dies hat den Vorteil, dass nunmehr die Einhakart an beiden Endgliedern baugleich ist und ein Benutzer nicht mehr, wie dies beim Stand der Technik notwendig ist, nach dem richtigen Endbereich des Halsteiles suchen muss.

In einer bevorzugten Ausführung sind die Öse und die beiden Eingreifaugen jeweils Löcher, deren Mittelpunkte sich auf den Ecken eines gleichschenkligen Dreiecks befinden. Dabei liegen die Schenkelwinkel in den Mittelpunkten der Eingreifaugen und haben ein Winkelmass von 50 bis 70 %, vorzugsweise 60 %. Auf diese Weise ist die Platte formschön und sehr praktisch zu gebrauchen.

In einer weiteren bevorzugten Ausführung ist die Platte begrenzt durch Kreisbogenstücke, die konzentrisch zu den Mittelpunkten der als Löcher ausgebildeten Ösen und Eingreifaugen verlaufen. Dadurch hat die Platte eine sehr griffige, gerundete Form und verhält sich in Zugrichtung der mit ihr verbundenen, benachbarten Teile im wesentlichen wie ein Ring.

In einer bevorzugten Ausführung sind alle Zwischenglieder Drahtbiegeteile. Gegenüber der bisher bekannte Dressurhalskette liegt der Unterschied daher im wesentlichen in den Endgliedern. Die Funktionalität bleibt beibehalten. Für den Benutzer behält die erfindungsgemässe Kette daher ihre Vorteile, die auch schon bei der Kette nach dem Stand der Technik realisiert waren.

Wenn beide Endglieder als Platten ausgebildet sind, kann das zweite Endzwischenglied der Halskette nach dem Stand der Technik immer noch in gleicher Bauform verwendet werden, es muss nun aber in umgekehrter Richtung eingehakt werden. Seine Arme hängen nun nicht mehr mit einem Mittelglied zusammen, sondern greifen in die Eingreifaugen der Platte, die das zugehörige Endglied bildet.

In einer weiteren bevorzugten Ausführung ist der lichte Durchmesser der runden Eingreifaugen etwas grösser, insbesondere 30 bis 120 % grösser gewählt als der Durchmesser des Drahtes, aus dem die Zwischenglieder gefertigt sind, insbesondere die Endzwischenglieder. Auf diese Weise wird die beschriebene Justierung des Abstandes der Arme der Endzwischenglieder immer wieder erreicht. Dabei kann es vorteilhaft sein, die Form der Eingreifaugen oval zu machen, wobei die Längsrichtung des Oval in Kettenzugrichtung verläuft. Auf diese Weise wird die seitliche Positionierung der Arme verbessert, das Ein- und Aushaken aber auch vereinfacht.

Weitere Vorteile und Merkmale der Erfindung ergeben sich aus den übrigen Ansprüchen sowie der nun folgenden Beschreibung eines nicht einzuschränkend zu verstehenden Ausführungsbeispiels der Erfindung, das unter Bezugnahme auf die Zeichnung im folgenden näher erläutert wird. In dieser Zeichnung zeigen:
Fig. 1: eine perspektivische Darstellung in Draufsicht einer Dressurhalskette nach dem Stand der Technik,
Fig. 2: eine Dressurhalskette nach der Erfindung in perspektivischer Darstellung entsprechend der Blickrichtung in Fig. 1,
Fig. 3: eine Draufsicht auf eine Platte, die ein Endglied bildet,
Fig. 4: eine perspektivische Darstellung eines Mittelgliedes, wie es für den Halsteil nach den Figuren 1 und 2 eingesetzt ist,
Fig. 5: eine Draufsicht ähnlich Figur 3 auf eine andere Ausführung einer Platte, die das Eingreifteil bildet und
Fig. 6: eine Darstellung wie Figur 5, jedoch mit einer anderen Ausbildung der Platte.

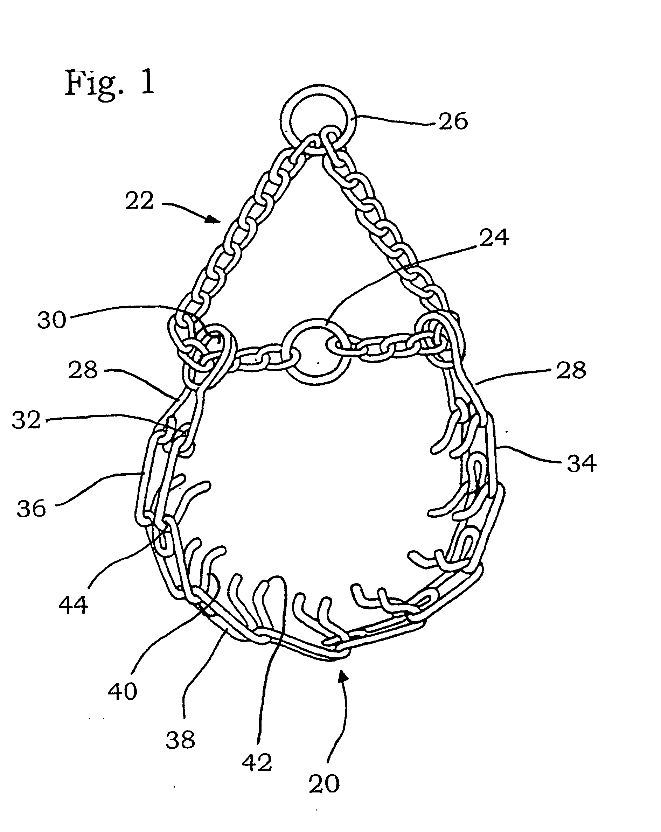

Wie Figur 1 zeigt, hat die vorbekannte Dressurhalskette einen Halsteil 20 und eine Durchzugskette 22. Letztere bildet eine geschlossene Schlaufe, die auch vom Benutzer nicht zu öffnen ist. Dahingegen ist das Halsteil 20 ein Strang von Kettengliedern, der geöffnet werden kann und geöffnet werden muss, um die Dressurhalskette einem Tier anzulegen.

Wie aus Figur 1 ersichtlich ist, hat die Durchzugskette einen inneren Ring 24 und einen äusseren Ring 26, die über gleich lange Kettenstränge miteinander verbunden sind. Die Durchzugskette schliesst den Halsteil zu einer geschlossenen Schlaufe.

Das Halsteil wird an seinen beiden Enden durch Endglieder 28 abgeschlossen, die beide baugleich sind. Es sind Drahtbiegeteile, die eine Öse 30 ausbilden, welche durch nahezu zwei Windungen des verwendeten Drahtmaterials erstellt ist. Durch sie greift jeweils eine Kettenpartie der Durchzugskette 22 hindurch. Die Ösen 30 sind dabei so bemessen, dass die beiden Ringe 24 und 28, in jedem Fall aber der innere Ring 24, nicht durch die Ösen 30 hindurchlaufen können.

Weiterhin hat jedes Endglied 28 zwei zu den anderen Kettengliedern des Halsteils 20 weisende Drahtbereiche mit freien Enden. Die freien Enden sind dabei so zurückgebogen, dass zwei Eingreifaugen 32 gebildet werden. Ihr Querschnitt ist etwa tropfenförmig.

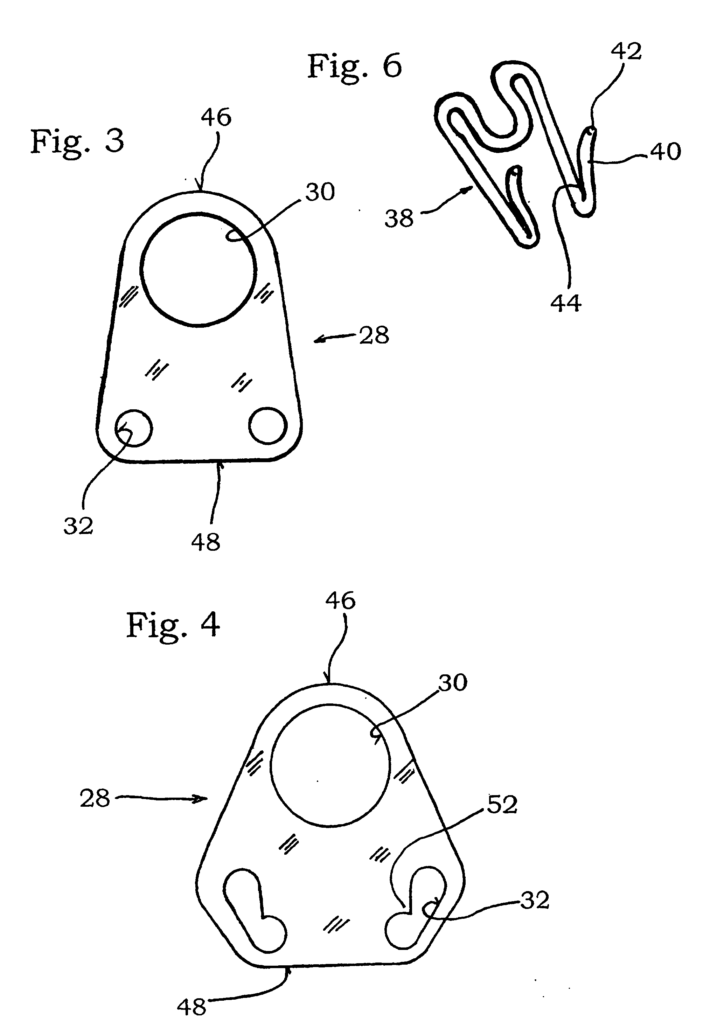

Zwischen den Endgliedern 28 befinden sich Zwischenglieder des Halsteils 20. Die dem Endglied 28 jeweils unmittelbar benachbarten Zwischenglieder werden als Endzwischenglieder bezeichnet, das in Figur 1 rechte Endzwischenglied wird als erstes Endzwischenglied 34 bezeichnet. Das in Figur 1 dem linken Endglied 28 zugeordnete Endzwischenglied wird als zweites Endzwischenglied 36 bezeichnet. Wie aus Figur 1 ersichtlich ist, sind diese Endzwischenglieder 34, 36 nicht baugleich. Vielmehr ist das erste Endzwischenglied baugleich mit den restlichen Zwischengliedern, die als Mittelglieder 38 bezeichnet werden. Für sie wird auf Figur 4 verwiesen, die eine perspektivische Darstellung eines derartigen Mittelgliedes 38, das auch mit dem ersten Endzwischenglied 34 übereinstimmt, zeigt. Die Dressurhalskette nach Figur 1 hat sechs Mittelglieder 38. Die Anzahl der Mittelglieder kann beliebig eingestellt werden, da sich die Mittelglieder aus ihrem Verband lösen lassen. Auf diese Weise kann die Länge des Halsteils 20 durch Einfügen oder Abnehmen von Mittelgliedern 38 variiert werden.

Wie insbesondere Figur 4 zeigt, besteht das erste Endzwischenstück 34 und bestehen die Mittelglieder 38 jeweils aus einem Grundkörper, der sich in einer Ebene befindet und etwa die Form eines W ausbildet, sowie zwei Armen 40, die freie Enden 42 aufweisen. Diese Arme 40 stehen aus der Ebene weg, sie liegen ihrerseits in einer Armebene, die etwa im Winkel von 30 % zur Ebene verläuft. Dabei sind die Arme 40 so zurückgebogen, dass U-förmige Einhakbereiche gebildet werden, die Hakenfunktion haben. Die Arme 40 sind zum freien Ende hin nach oben gerundet abgebogen und ausserdem weisen die freien Arme so voneinander weg, dass zu den freien Enden 42 hin der Abstand zwischen den Armen 40 grösser wird.

Das zweite Endzwischenglied 36 hat ebenso geformte Arme 40 mit freien Enden 42 und U-förmigen Einhakbereichen 44 wie die Mittelglieder 38 bzw. das erste Endzwischenglied 34. Es unterscheidet sich von diesem aber dadurch, dass der Zentralbereich nun nicht mehr W-förmig ist, sondern selbst einen Haken bildet, der durch die beiden Eingreifaugen 20 des zugehörigen Endgliedes 20 hindurchgreift. An dieser Stelle lassen sich das Endglied 28 und das zugehörige zweite Endzwischenglied 36 nicht unmittelbar trennen, vielmehr muss erst das zweite Endzwischenglied 36 von seinem anderen Nachbarglied getrennt werden, um es von dem zugehörigen Endglied 28 trennen zu können. Dadurch wird es aber vereinzelt. Ein Benutzer wird eine derartige Trennung also nicht durchführen, vielmehr nur zwischen dem ersten Endzwischenglied 34 und dem zugehörigen Endglied 28 trennen. Es ist möglich, das Halsteil 20 zwischen seinen Mittelgliedern 38 zu trennen.

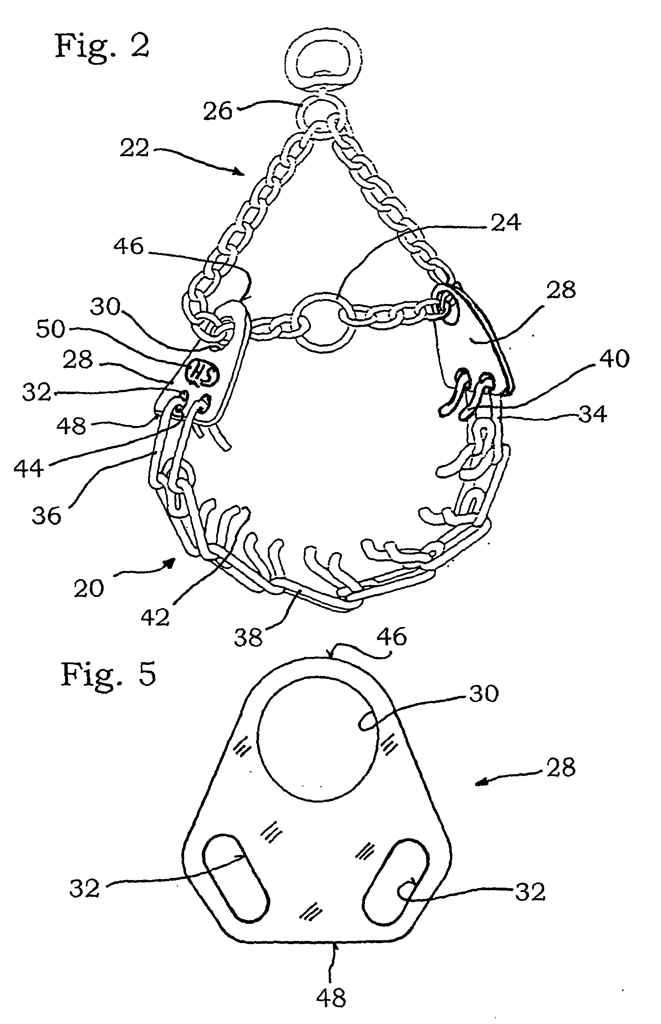

Wie Figur 2 zeigt, sind die Endglieder 28 nach wie vor baugleich, nun aber als Platten ausgeführt. Eine Draufsicht auf eine derartige Platte zeigt Figur 3. Die Platten sind in gleicher Oberflächenausführung wie die restlichen Teile der Kette ausgebildet, also beispielsweise vernickelt, verchromt oder entsprechend behandelt. Sie können aber auch in anderer Ausführung hergestellt sein, um sie besser erkennen zu können und die Stelle, an der ein Auftrennen des Halsteils 20 erfolgen soll, besser zu kennzeichnen.

Wie aus den Figuren 2 und 3 ersichtlich ist, sind die plattenförmigen Endglieder 28 etwas kürzer als die sonstigen Kettenglieder. Während die Länge der Mittelglieder 38 und der anderen Kettenglieder etwas über 40 mm liegt, liegt die Gesamtlänge der Endglieder 28 in Plattenform etwas unterhalb von 30 mm. Damit ist auch die wirksame Länge, die die Endglieder 28 zur Länge des Halsteils 40 und damit der geschlossenen Schlaufe, die um den Hals eines Tieres gelegt wird, geringer.

Wie aus den Figuren ersichtlich ist, haben die plattenförmigen Endglieder 28 im wesentlichen aussen gesehen eine rechteckförmige Kontur, die Kontur kann auch beschrieben werden durch ein gleichschenkliges Dreieck, das an seinem sehr spitzen Winkel ässerst stark abgerundet ist.

Die plattenförmigen Endglieder 28 haben einen ersten Endbereich 46, dort sind sie stark gerundet und dort befindet sich die kreisrunde Öse 30 mit etwa 14 mm Innendurchmesser. Es kann hier ein lichter Innendurchmesser gewählt werden, der auch dem Innendurchmesser der Öse 30 nach dem Stand der Technik (Fig. 1) entspricht. Vorteilhafterweise wird der Innendurchmesser aber etwas geringer gewählt, sodass er gut ausreicht, um die jeweilige Kettenpartie der Durchzugskette 22 hindurchlaufen zu lassen. Dies ist im gezeigten Ausführungsbeispiel der Fall, ein Vergleich der Figuren 1 und 2 zeigt, dass bei Figur 2 der lichte Durchmesser der Ösen 30 deutlich geringer ist.

Am ersten Endbereich 46 ist das plattenförmige Endglied 28 durch einen sich nahezu über 180° erstreckenden Kreisbogen begrenzt, der zentrisch ist zum Mittelpunkt der Öse 30. Es verbleibt in Kettenlängsrichtung eine Materialstärke von etwa 2 - 4 mm. Dadurch verhält sich der erste Endbereich in Kettenzugrichtung praktisch wie ein Ring, in der Tat stellt er einen Halbring dar.

Der zweite Endbereich verläuft im gezeigten Ausführungsbeispiel gerade, an seinen Eckpunkten befinden sich die beiden Eingreifaugen 32, die - wie im Stand der Technik - in ihren lichten Abmessungen deutlich kleiner sind als die Öse 30. Nunmehr sind aber die Eingreifaugen 32 rund. Während der Durchmesser des Drahtmaterials, aus denen die Zwischenglieder gebogen sind, etwa 2 - 3 mm liegt, ist der lichte Durchmesser der Eingreifaugen im Bereich von 4 - 5 mm und damit etwa doppelt so gross.

Zwischen den beiden Endbereichen 46, 48 verbleibt ein Feld 50, das Hinweise, Firmenbeschriftungen usw. aufnehmen kann. Ein derartiges Feld 50 war beim Stand der Technik nicht möglich noch vorgesehen.

Wie aus Figur 3 ersichtlich ist, verlaufen auch im Bereich der beiden Eingreifaugen 20 die Ränder der Platte konzentrisch zum Mittelpunkt des jeweiligen Eingreifauges 32, wodurch auch hier ringähnliche Verhältnisse gebildet werden. Die Rundung erstreckt sich über etwas mehr als 90°. Im übrigen sind die Begrenzungen der Platte gerade Linien.

Im Gegensatz zum Stand der Technik ist nun das Zusammenwirken zwischen den plattenförmigen Endgliedern 28 des Halsteils 20 und den zugeordneten Endzwischengliedern 34, 36 in gleicher Art ausgeführt. Um dies zu erreichen, wird als zweites Endzwischenglied 36 ein Teil verwendet, wie es baugleich ist mit dem zweiten Endzwischenglied nach dem Stand der Technik, nunmehr wird dieses Endzwischenglied jedoch in anderer Richtung innerhalb der Kette verwendet. Seine Arme kooperieren also nicht mit dem zugehörigen Mittelglied 38, sondern mit den Eingreifaugen 32.

Figur 5 zeigt eine geänderte Ausführung der Platte, die die beiden baugleichen Endglieder 28 bildet. Es werden im folgenden nur die Unterschiede zur Ausführung gemäss Figur 3 beschrieben. Die beiden Eingreifaugen sind nun nicht mehr als kreisrunde Löcher ausgeführt, sondern als Langlöcher, die in Kettenzugrichtung schräg verlaufen, der Winkel liegt beispielsweise bei 30°. Diese Eingreifaugen haben an ihrem unteren Ende, das von der Öse 30 den grössten Abstand hat, einen Relativabstand zueinander, der dem Abstand der Platte gemäss Figur 3 entspricht. An ihren oberen Enden haben sie aber einen Relativabstand, der dem Abstand der freien Enden 42 des zugehörigen Endzwischengliedes 34 bzw. 36 entspricht. Dadurch kann dieses unmittelbar an den oberen Endbereichen der Eingreifaugen 32 eingesetzt werden, ohne dass man die Arme 40 verbiegen muss. In Kettenzugrichtung rutscht es dann nach unten. Die U-förmigen Einhakbereiche 44 liegen dann genauso wie in der Ausführung gemäss Figur 3 am unteren Rand der Eingreifaugen 32 an.

Die Ausführung nach Figur 6 entspricht weitgehend der Ausführung nach Figur 5, jedoch ist nunmehr der Rückweg für die Einhakbereiche 44 erschwert. Die Langlöcher sind nun nicht mehr mit gleicher Weite über ihre gesamte Länge ausgeführt, sondern weisen eine Engstelle 52 auf. Diese hat die Form eines Sägezahns. An dieser Engstelle 52 müssen die Einhakbereiche 44 vorbeigleiten. Beim Schliessen der Ketten gleiten sie in Figur 6 von oben nach unten an der Engstelle 52 vorbei, dies ist durch die Sägezahnform der Engstelle 52 begünstigt. Bei der Bewegung in Gegenrichtung, wie sie beim Trennen anfällt, stossen die Einhakbereiche 44 dagegen an der Engstelle 52 an, was einem Trennen entgegenläuft.

Es ist auch möglich, andere Sperrmittel in den als Langlöchern ausgebildeten Eingreifaugen in Ausführungen ähnlich wie Figur 5 und 6 einzusetzen. So können zwischen den beiden Endpositionen beispielsweise Federzungen, wie sie für Karabinerhaken bekannt sind, oder auf der Platte angelenkte Arme, die den Rückweg komplett versperren und federbelastet sind, vorgesehen werden.

## Patentansprüche

1. Dressurhalskette für Tiere, z. B. Hunde, mit einem Halsteil (20) und einer Durchzugskette (22), bei der das strangförmige Halsteil (20) aus einer Vielzahl von Kettengliedern zusammengesetzt ist, zu denen Zwischenglieder und zwei Endglieder (28) gehören und diese Endglieder (28) jeweils zwei Eingreifaugen (32), in die den zwei Endgliedern benachbarte Endzwischenglieder (34, 36) eingreifen, und eine Öse (30) aufweisen, und die Durchzugskette (22) eine geschlossene Schlaufe bildet, die durch die Ösen (30) der beiden Endglieder (28) hindurchgreift, **dadurch gekennzeichnet, dass** mindestens eines der beiden Endglieder (28) als Platte ausgebildet ist, die an einem ersten Endbereich (46) die Öse (30) und an einem zweiten Endbereich (48), der dem ersten Endbereich (46) gegenüberliegt, die beiden Eingreifaugen (32) aufweist.

2. Dressurhalskette nach Anspruch 1, **dadurch gekennzeichnet, dass** die Öse (30) und die beiden Eingreifaugen (32) jeweils als Löcher in der Platte ausgeführt sind, deren Mittelpunkte sich auf den Ecken eines gleichschenkligen Dreiecks befinden.

3. Dressurhalskette nach Anspruch 1, **dadurch gekennzeichnet, dass** beide Endglieder (28) als Platten ausgebildet sind und dass beide mit diesen Endgliedern zusammenhängende Endzwischenglieder (34, 36) nach innen vorspringende Arme (40) mit freien Enden (42) haben.

4. Dressurhalskette nach Anspruch 3, **dadurch gekennzeichnet, dass** die Platte durch Kreisbogenstücke begrenzt ist, die um die Mittelpunkte der Löcher verlaufen.

5. Dressurhalskette nach Anspruch 1, **dadurch gekennzeichnet, dass** beide Endglieder (28) als Platten ausgebildet sind.

6. Dressurhalskette nach Anspruch 1, **dadurch gekennzeichnet, dass** die Zwischenglieder, zu denen auch die Endzwischenglieder (34, 36) gehören, Drahtbiegeteile sind.

7. Dressurhalskette nach Anspruch 4, **dadurch gekennzeichnet, dass** die Eingreifaugen (32) etwas grösser, insbesondere 50 bis 120 % grösser im Durchmesser gewählt sind als der Durchmesser des Drahtes beträgt, aus dem die Zwischenglieder gefertigt sind.

8. Dressurhalskette nach Anspruch 1, **dadurch gekennzeichnet, dass** die Zwischenglieder nach innen vorspringende Arme (40) mit freien Enden (42) haben.

9. Dressurhalskette nach Anspruch 1, **dadurch gekennzeichnet, dass** die Arme (40) V-förmig zueinander verlaufen, insbesondere zu ihren freien Enden (42) einen zunehmend grösseren Abstand aufweisen.

10. Dressurhalskette nach Anspruch 1, **dadurch gekennzeichnet, dass** die Platte eben ist und eine Materialstärke von 1 bis 4, vorzugsweise 2 mm aufweist.

11. Dressurhalskette nach Anspruch 1, **dadurch gekennzeichnet, dass** die Platte eine Aufnahmefläche für Informationen ausbildet.

12. Dressurhalskette nach Anspruch 1, **dadurch gekennzeichnet, dass** die Länge des mindestens einen als Platte ausgebildeten Endgliedes geringer ist als die Länge der Zwischenglieder, insbesondere die Länge im Bereich 50 bis 80 % der Länge der Zwischenglieder liegt.

## Claims

1. A choke collar for animals, for dogs for example, with a neck part (20) and a pull chain (22), the strand-shaped neck part (20) being composed of a plurality of chain links comprising connecting links and two final links (28), said final links (28) being each provided with two eyes for engagement (32) with the final connecting links (34, 36) adjacent the two final links and with an eyelet (30), the pull chain (22) forming a closed loop that reaches through the eyelets (30) of the two final links (28), wherein at least one of the two final links (28) is configured as a plate that is provided, in a first end region (46), with the eyelet (30) and, in a second end region (48) located opposite the first end region (46), with the two eyes for engagement (32).

2. The choke collar of claim 1, wherein the eyelet (30) and the two eyes for engagement (32) are configured as holes in the plate, the respective center of said holes being situated on the angles of an isosceles triangle.

3. The choke collar of claim 1, wherein the two final links (28) are configured as plates and wherein the two final connecting links (34, 36), which are associated with said final links, have arms (40) with free ends (42) that project inward.

4. The choke collar of claim 3, wherein the plate is bounded by pieces in the shape of an arc of a circle which exhibit a course around the centers of the holes.

5. The choke collar of claim 1, wherein the two final links (28) are configured as plates.

6. The choke collar of claim 1, wherein the connecting links, which include the final connecting links (34, 36) are made of bent wire.

7. The choke collar of claim 4, wherein the diameter of the eyes for engagement (32) is slightly larger, more specifically 50 to 120 % larger than the diameter of the wire used to make said connecting links.

8. The choke collar of claim 1, wherein the connecting links have arms (40) with free ends (42) that project inward.

9. The choke collar of claim 1, wherein the arms (40) converge in a "V" shape and are increasingly diverging toward their free ends (42).

10. The choke collar of claim 1, wherein the plate is level and the material thickness thereof ranges between 1 and 4 and preferably amounts to 2 mm.

11. The choke collar of claim 1, wherein the plate constitutes a surface for carrying information.

12. The choke collar of claim 1, wherein the length of the at least one final link configured as a plate is smaller than the length of the connecting links, said length more specifically amounting to between 50 and 80% of the length of the connecting links.

## Revendications

1. Collier de dressage pour animaux, par exemple pour chiens, avec une partie (20) destinée au cou et avec une chaîne de traction (22), dans lequel la partie (20) en forme de cordon destinée au cou est composée d'une pluralité d'éléments de chaîne qui comprennent des éléments intermédiaires et deux éléments terminaux (28), et dans lequel ces éléments terminaux (28) sont pourvus respectivement de deux yeux destinés à l'engagement (32) dans lesquels se prennent des éléments intermédiaires terminaux (34, 36) voisins des deux éléments terminaux, ainsi que d'un oeillet (30), et dans lequel ladite chaîne de traction (22) forme une boucle fermée qui passe à travers les oeillets (30) des deux éléments terminaux (28), **caractérisé par le fait que** l'un au moins des deux éléments terminaux (28) est réalisé comme plaque qui présente, sur une première zone terminale (46), l'oeillet (30) et, sur une deuxième zone terminale (48) située en vis-à-vis de ladite première zone terminale (46), les deux yeux destinés à l'engagement (32).

2. Collier de dressage selon la revendication 1, **caractérisé par le fait que** l'oeillet (30) et les deux yeux destinés à l'engagement (32) sont réalisés respectivement en tant que trous dans la plaque, dont les points centraux sont situés sur les angles d'un triangle isocèle.

3. Collier de dressage selon la revendication 1, **caractérisé par le fait que** les deux éléments terminaux (28) sont réalisés comme plaques et que les deux éléments intermédiaires terminaux (34, 36) liés à ces éléments terminaux présentent des bras (40) faisant saillie vers l'intérieur et ayant des extrémités libres (42).

4. Collier de dressage selon la revendication 3, **caractérisé par le fait que** la plaque est limitée par des pièces en arc de cercle qui s'étendent autour des points centraux des trous.

5. Collier de dressage selon la revendication 1, **caractérisé par le fait que** les deux éléments terminaux (28) sont réalisés en tant que plaques.

6. Collier de dressage selon la revendication 1, **caractérisé par le fait que** les éléments intermédiaires parmi lesquels comptent également les éléments intermédiaires terminaux (34, 36) sont des pièces en fil pliées.

7. Collier de dressage selon la revendication 4, **caractérisé par le fait que** le diamètre des yeux destinés à l'engagement (32) est un peu plus grand, en particulier entre 50 et 120 % plus grand que le diamètre du fil à partir duquel les éléments intermédiaires sont fabriqués.

8. Collier de dressage selon la revendication 1, **caractérisé par le fait que** les éléments intermédiaires présentent des bras (40) faisant saillie vers l'intérieur et ayant des extrémités libres (42).

9. Collier de dressage selon la revendication 1, **caractérisé par le fait que** les bras (40) s'étendent en V l'un par rapport à l'autre, en particulier présentent une distance de plus en plus importante vers leurs extrémités libres (42).

10. Collier de dressage selon la revendication 1, **caractérisé par le fait que** la plaque est plane et présente une épaisseur de matière comprise entre 1 et 4, de préférence de 2 mm.

11. Collier de dressage selon la revendication 1, **caractérisé par le fait que** ladite plaque forme une surface de support d'informations.

12. Collier de dressage selon la revendication 1, **caractérisé par le fait que** la longueur dudit au moins un élément terminal réalisé comme plaque est plus faible que la longueur des éléments intermédiaires, en particulier que la longueur fait entre 50 et 80 % de la longueur des éléments intermédiaires.
